# EUROPÄISCHE PATENTSCHRIFT

(11) **EP 0 299 399 B1**
(45) Veröffentlichungstag und Bekanntmachung des Hinweises auf die Patenterteilung: **01.12.1993**
(21) Anmeldenummer: 88111018.3
(22) Anmeldetag: 11.07.1988
(51) Int. Cl.: A47J 31/40

(54) **Kaffeezubereitungseinrichtung**
Device for brewing coffee
Dispositif pour la préparation de café

(30) Priorität: 17.07.1987 CH 2720/87
(43) Veröffentlichungstag der Anmeldung: 18.01.1989
(73) Patentinhaber: SISTAR SA, CH-1950 Sion (CH)
(72) Erfinder: In-Albon, Jean-Paul, CH-1917 Ardon (CH); Schurr, André, CH-6467 Schattdorf (CH); Sauthier, Claude, CH-1950 Sion (CH); Eicher, Heinz-Anton, CH-8640 Rapperswil (CH)
(74) Vertreter: Micheli & Cie

(56) Entgegenhaltungen:
- EP-A- 0 154 206
- EP-A- 0 202 517
- BE-A- 745 939

## Beschreibung

Die Erfindung betrifft eine Einrichtung zur Zubereitung von Kaffee für den Einsatz in einer automatischen Kaffeemaschine, welche einen Brühzylinder zur Aufnahme von Kaffeepulver, gegeneinanderlaufende Kolben zur Verdichtung des Kaffeepulvers sowie Mittel zur Zuführung von Wasser oder Dampf und Abführung des gebrühten Kaffees enthält.

Eine solche Einrichtung, auch Extraktionsvorrichtung genannt, welche die beschriebenen Elemente enthält, ist beispielsweise aus EP 0 202 517 bekannt.

Dabei wird gemahlener Kaffee beispielsweise durch eine seitliche Oeffnung in einen beidseitig offenen Brühzylinder eingebracht, dessen eine Oeffnung durch die Fläche des einen Kolbens abgeschlossen ist und die andere Oeffnung noch offen steht. In einem weiteren Schritt fährt nun der erste Kolben in den feststehenden Brühzylinder hinein gegen die Oeffnung, welche nun vom zweiten Kolben durch eine Bewegung in entgegengesetzer Richtung abgeschlossen worden ist. Dadurch wird das Kaffeepulver von der seitlichen Einbringöffnung gegen das eine Ende des Brühzylinders weggeschoben und soweit verdichtet, als der erste Kolben bewegt wird. Mit Hilfe einer Kontaktvorrichtung, welche die Bewegung des Kolbens stoppt, sobald der gegen die Wirkung einer Feder axial frei bewegliche Kolben einen bestimmten Federweg zurückgelegt hat.

Durch das somit in steuerbarer Weise verdichtete Kaffeepulver wird nun Wasser oder Dampf, beispielsweise durch eine axiale Bohrung in der einen Kolbenstange, durch die mit Kaffeepulver gefüllte Brühkammer hindurchgeführt und der gebrühte Kaffee, z.B durch eine ebensolche Bohrung in der andere Kolbenstange, abgeführt. Anschliessend wird der zweite Kolbe wieder in die Ausgangsposition gefahren und die Kaffeesatzportion durch eine weitere Bewegung des ersten Kolbens in seiner ursprünglichen Bewegungsrichtung ausgestossen. Zuletzt fährt auch der erste Kolben wieder im Brühzylinder in seine Ausgangsposition zurück.

Anderseits sind Kaffeemaschinen wie die in der BE-A-745939 beschriebene bekannt, bei denen der Mechanismus zur Herstellung des Kaffees horizontal angeordnet ist und eine Aufgusskammer aufweist, die dazu bestimmt ist, das Kaffeepulver aufzunehmen, und die in zumindest einer Arbeitstellung von einem Zylinder und zwei seitlichen Kolben verschlossen wird. Diese Kaffeemaschine besitzt eine komplizierte und kostspielige Vorrichtung zum Verschliessen der Aufgusskammer durch Axialbewegung des Zylinders und zur darauffolgenden Verdichtung des Kaffeepulvers mittels der Kolben.

Aufgabe der vorliegenden Erfindung ist es nun, die Steuerung bzw. den Antrieb der beweglichen Teile der Einrichtung zu vereinfachen, ohne die grundsätzlich richtige Funktion zu verändern.

Diese Aufgabe wird bei einer Einrichtung zur automatischen Zubereitung von Kaffee in einer automatischen Kaffeemaschine, mit einem Brühzylinder zur Aufnahme von Kaffeepulver, welchem zwei in der Zylinderachse relativ zueinander verschiebbare Kolben mit zugehörigen Kolbenstangen zugeordnet sind, um eine Brühkammer abzugrenzen und eingefülltes Kaffeepulver zu verdichten, wobei der erste Kolben das eine Zylinderende verschliesst und der zweite Kolben neben einer Arbeitsstellung im Zylinder eine Stellung ausserhalb des letzteren einnehmen kann, um das andere Zylinderende zum Ausstossen des verbrauchten Kaffeepulvers durch den ersten Kolben freizugeben, ferner mit Mitteln zu Zufuhr von Wasser oder Dampf und Abfuhr des gebrühten Kaffees erfindungsgemäss dadurch gelöst, dass eine Antriebsvorrichtung vorgesehen ist, um den Brühzylinder entlang wenigstens einer Längsführung in gesteuerter Weise entlang seiner Achse zwischen vorbestimmten Stellungen hin-und herzubewegen, wobei er in der einen Bewegungsrichtung über den im wesentlichen feststehenden zweiten Kolben fährt, dabei den ersten Kolben zwangsläufig mitschleppt, bis das eingefüllte Kaffeepulver zwischen den Kolben mit einer vorbestimmten Kraft verdichtet ist, während er in der entgegengesetzten Bewegungsrichtung unter Freigabe des entsprechenden Zylinderendes vom zweiten Kolben herunterfährt und sich bezüglich dem ersten, in einer vorstimmten Stellung durch des Auftreffen des freien Endes seiner Kolbenstange an einem festen Anschlag arretierten Kolben verschiebt, so dass dieser die verbrauchte Kaffeepulverportion aus dem freien Zylinderende ausstösst.

Als einziger positiv angetriebener Teil der Einrichtung verbleibt nun nur noch der Brühzylinder. Die beiden axial verschiebbaren Kolben werden durch die Bewegung des Brühzylinders selbstständig in die entsprechenden Positionen gebracht. Dadurch ist lediglich noch eine einzige Antriebsvorrichtung zu Steuerung des ganzen Kaffeepulververdichtungs- und -brühvorganges notwendig.

Es liegt auf der Hand, dass die axiale Verschiebung des Brühzylinders durch eine beliebige Antriebsvorrichtung erfolgen kann; vorzugsweise wird aufgrund der einfachen Steuerbarkeit ein Antrieb mit einem Elektromotor und Zahnriemen verwendet. Ebenso lässt sich die axiale Verschiebung des Brühzylinders beispeilsweise über eine durch ein Getriebe mit dem Elektromotor verbundene Gewindestange, welche axial schraubbar durch das Brühzylindergehäuse geführt ist oder durch einen Kurbeltrieb bewerkstelligen. Auch kann die Bewegung durch einen Hydraulikzylinder erfolgen, dessen Kolbenstange mit dem Brühzylinder in geeigneter Weise verbunden wird.

Die Erfindung wird nachstehend anhand eines in der Zeichnung dargestellten Ausführungsbeispiels einer Extraktionsvorrichtung noch näher erläutert. Es zeigen:
Fig. 1 einen Schnitt durch die Vorrichtung mit dem Brühzylinder in der Mahlposition.
Fig. 2 einen Schnitt durch die Vorrichtung mit dem Brühzylinder in der Endverdichtungsposition,
Fig. 3 einen Schnitt durch die Vorrichtung mit dem Brühzylinder in der Kaffesatzauswerfposition resp. Warteposition,
Fig. 4 eine schematische Ansicht eines Einschubmoduls, in welchem die Extraktionsvorrichung integriert ist.

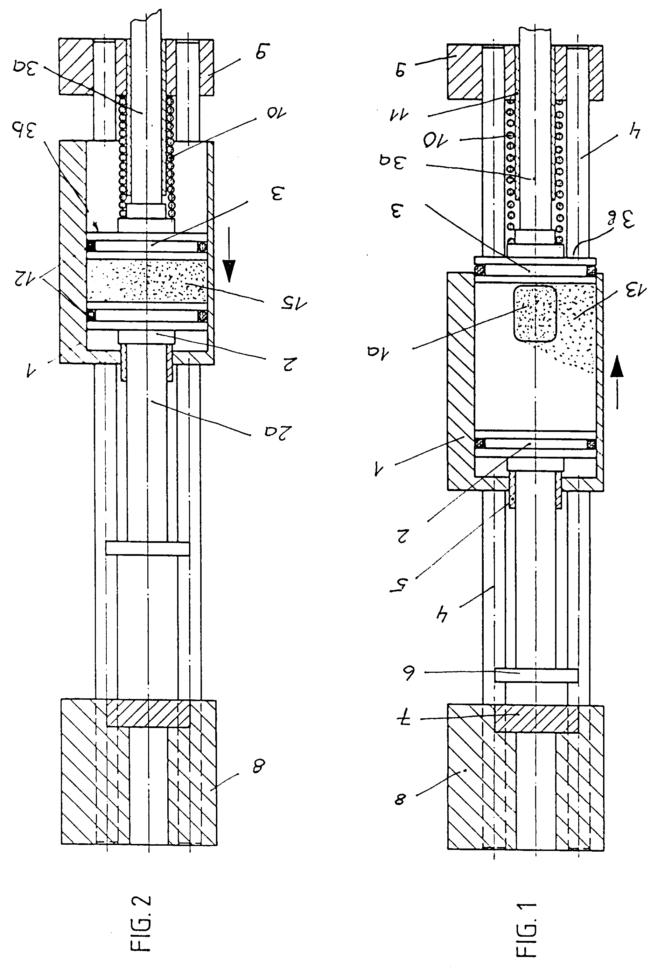

Fig. 1 zeigt einen Brühzylinder 1, der eine seitliche Zuführöffnung 1a aufweist, durch welche das gemahlene und portionierte Kaffeepulver 13 eingebracht wird. Dabei befindet sich ein erster Kolben 2 dicht über dem linksseitigen Boden des Brühzylinders 1, wobei er durch eine Büchse 5 sowohl geführt wie auch positioniert wird. Der zweite Kolben 3 schliesst in der gezeigten Stellung gerade die rechtsseitige Oeffnung des Brühzylinders 1. Seine Kolbenstange 3a wird in einer Führungsbüchse 11 gelagert und in der Zylinderachse geführt, wobei die Büchse 11 in einem Halteblock 9 festgemacht ist. An diesem Halteblock 9 sind ebenfalls zwei Führungsstangen 4 angebracht, deren gegenüberliegende Enden in einem weiteren Halteblock 8 eingebettet sind.

Der Brühzylinder kann nun, da sein Gehäuse zwei Bohrungen zur Durchführung der Führungsstangen 4 aufweist, bezüglich der Kolben- bzw. Zylinderachsen translatorisch bewegt werden. Wenn das Kaffeepulver 13 fertig eingebracht worden ist, wird der Brühzylinder 1 in Pfeilrichtung (Fig. 1) bewegt, beispielsweise durch einen Hydraulikzylinder (nicht dargestellt), bis in die Position, wie sie in Fig. 2 dargestellt ist.

Der dabei mitgeschleppte Kolben 2 befindet sich immer noch am Boden des Brühzylinders, während sich der zweite Kolben 3 nun etwa in der halben Tiefe des Brühzylinders befindet und dadurch das Kaffeepulver verdichtet worden ist.
Gleichzeitig ist das Kaffeepulver von der Zuführöffnung 1a gegen den Brühzylinderboden wegbewegt worden, so dass ein abgeschlossener Raum 15 (Brühkammer) mit verdichtetem Kaffeepulver entstanden ist. Durch den Verdichtungsdruck ist der Koben 3 axial gegen den Druck der Feder 10 zum Halteblock 9 hin leicht verschoben worden. Dieser Verschiebeweg ist ein direktes Mass für den Verdichtungsdruck des Kaffeepulvers, der durch geeignete Wahl der Federkonstante der Feder 10 bestimmt werden kann und daher beispielsweise durch Anordnung eines Mikroschalters, der durch die untere Kolbenfläche 3b oder durch einen Nocken oder Nut auf der Kolbenstange 3a betätigt wird, die Verdichtungsbewegung des Brühzylinders anhalten kann. Dadurch wird jederzeit eine konstante, vorbestimmbare Verdichtung des Kaffeepulvers gewährleistet, was einen grossen Einfluss auf die Qualität des gebrühten Kaffees hat.

In der in Fig. 2 gezeigten Position wird nun heisses Wasser oder Dampf durch das verdichtete Kaffeepulver geleitet, um den gebrühten Kaffee zu erzeugen. Dies erfolgt beispielsweise durch Kanäle in den Kolbenstangen 2a und 3a, wobei die jeweiligen Oeffnungen in den Kolbenböden der Kolben 2 und 3 ein Sieb als Abdeckung aufweisen. Die Durchflussrichtung des Wassers resp. gebrühten Kaffees kann dabei beliebig gewählt werden. Da das heisse Wasser oder Dampf unter grossem Druck durch den Raum 15 geleitet wird, sind die Kolben 2,3 mit Kolbendichtungsringen 12 versehen.

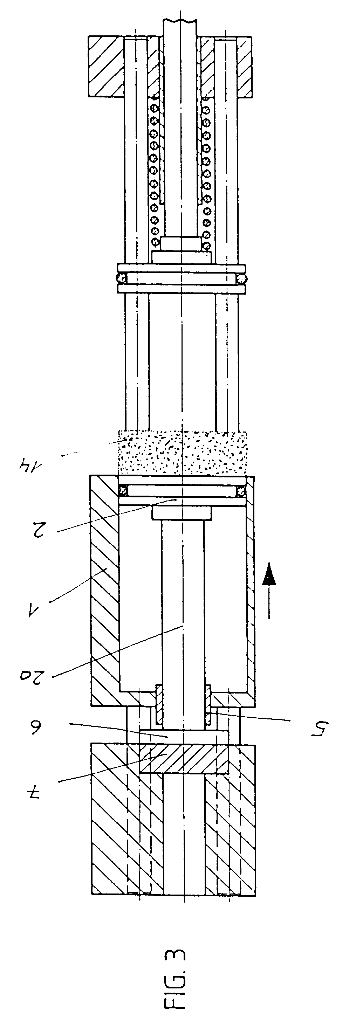

Nach Beendigung des Brühvorganges wird der Brühzylinder 1 in Pfeilrichtung (Fig. 2) gegen den Halteblock 8 bewegt. Durch die Feder 10 wird der Kolben 3 wieder in seine Ausgangsposition geführt. Fig. 3 zeigt den Brühzylinder in der Kaffeesatzauswerfposition resp. Warteposition. Beim Zurückfahren des Brühzylinders 1 wird die Kaffeesatzportion 14 durch den Kolben 2 aus dem Zylinder ausgestossen, entweder schon am Anfang der Bewegung oder spätestens, wenn der an der Kolbenstange 2a angebrachte Teller 6 gegen den Anschlag 7 stösst. Dieser Anschlag 7 besteht beispielsweise aus einem magnetischen Material, um den Kolben 2 bei der Vorwärtsbewegung des Brühzylinders 1 in die Ausgangsposition wie in Fig. 1 gezeigt, zu fixieren, bis er von der Büchse 5 ebenfalls wieder mitbewegt wird. Es ist gleichgültig, ob während des oben geschilderten Zurückfahrens der Kolben 2 anfänglich am Brühzylinderboden positioniert bleibt oder wegen der Haftwirkung der Kaffeesatzportion 14 erst nach dem Anschlagen der Büchse 5 am Teller 6 mitbewegt wird.

Um die Kaffeesatzportion 14 wegzuführen und gegebenenfalls gleichzeitig die anliegenden Geräteteile (z.B. Kolbenflächen) vom restlichen Kaffeesatz zu reinigen, wird vorzugsweise durch die Bohrung (nicht dargestellt) im Kolben ein Heisswasserstrahl hindurchgeleitet. In diesem Fall wird keine zusätzliche Reinigungsapparatur benötigt.

Bis zu einem neuen Brühvorgang bleibt der Brühzylinder 1 nun in dieser Ruhestellung stehen.

Die erfindungsgemässe Extraktionsvorrichtung weist einen wesentlich vereinfachten Bewegungsapparat im Vergleich zu einer herkömmlichen Vorrichtung auf. Damit wird u.a. die Betriebssicherheit erhöht und die notwendige Antriebsenergie reduziert.

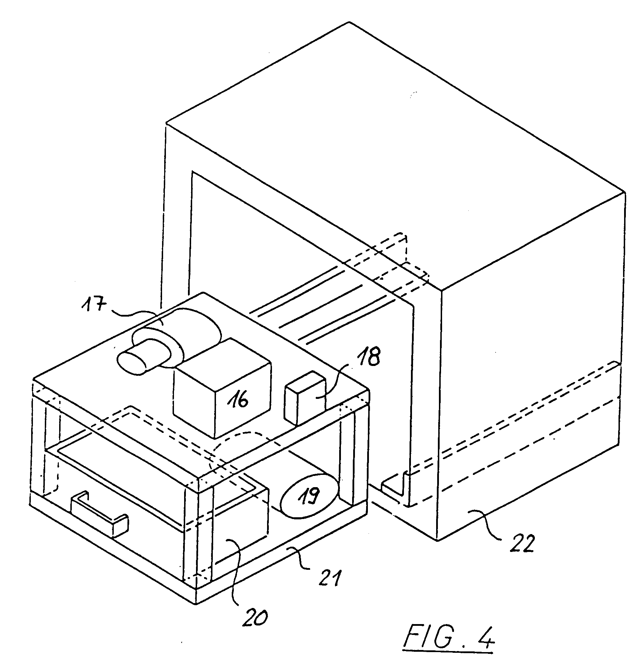

Fig. 4 zeigt schematisch, wie eine solche Extraktionsvorrichtung 16 zusammen mit weiteren Komponenten, wie z.B. einer Kaffeemühle und Portionierungseinrichtung 17, Bedienungselementen 18, einer Heisswasseraufbereitungsanlage 19 und einer Auffangschublade 20 zum Sammeln der Kaffeesatzportionen auf einem Systemeinschub 21 angeordnet werden kann. Dieser Einschub 21 kann in ein beliebiges Gehäuse 22 leicht auswechselbar eingebaut werden. Dadurch wird eine allfällige Reparatur oder das Auswechseln einer der Komponenten erleichtert. Im weiteren besteht der Vorteil, dass bei Störungen gegebenenfalls der ganze Einschub ausgewechselt werden kann und somit die Ausfallzeit der Kaffeemaschine auf ein Minimum reduziert werden kann. Es ist dazu lediglich notwendig, die Strom- und Wasserzufuhr abzukoppeln und eine allfällige Verriegelung des Systemeinschubes zu lösen.

## Patentansprüche

1. Einrichtung zur Zubereitung von Kaffee in einer automatischen Kaffeemaschine, mit einem Brühzylinder (1) zur Aufnahme von Kaffeepulver, welchem zwei in der Zylinderachse relativ zueinander verschiebbare Kolben (2,3), mit zugehörigen Kolbenstangen (2a,3a), zugeordnet sind, um eine Brühkammer (13) abzugrenzen und eingefülltes Kaffeepulver zu verdichten, wobei der erste Kolben (2) das eine Zylinderende verschliesst und der zweite Kolben (3) neben einer Arbeitsstellung im Zylinder (1), eine Stellung ausserhalb des letzteren einnehmen kann, um das andere Zylinderende zum Ausstossen des verbrauchten Kaffeepulvers durch den ersten Kolben (2) freizugeben, ferner mit Mitteln zur Zufuhr von Wasser oder Dampf und Abfuhr des gebrühten Kaffees, dadurch gekennzeichnet, dass eine Antriebsvorrichtung vorgesehen ist, um den Brühzylinder entlang wenigstens einer Längsführung (4) in gesteuerter Weise entlang seiner Achse zwischen vorbestimmten Stellungen hin und herzubewegen, wobei er in der einen Bewegungs-richtung über den im wesentlichen feststehenden zweiten Kolben (3) fährt, dabei den ersten Kolben (2) zwangsläufig mitschleppt, bis das eingefüllte Kaffeepulver zwischen den Kolben mit einer vorbestimmten Kraft verdichtet ist, während er in der entgegengesetzten Bewegungsrichtung unter Freigabe des entsprechenden Zylinderendes vom zweiten Kolben (3) herunterfährt und sich bezüglich dem ersten in einer vorbestimmten Stellung durch das Auftreffen des freien Endes (6) seiner Kolbenstange (2a) an einem festen Anschlag (7) arretierten Kolben (2) verschiebt, so dass dieser die verbrauchte Kaffeepulverportion aus dem freien Zylinderende ausstösst.

2. Einrichtung nach Anspruch 1, dadurch gekennzeichnet, dass der erste Kolben (2) in einer Führung (5) am einen Ende des Brühzylinders (1) so geführt ist, dass er sich zwischen einer ersten Endstellung an diesem einen Zylinderende und einer zweiten Endstellung am anderen, offenen Ende des Zylinders (1) frei bewegen kann.

3. Einrichtung nach Anspruch 1 oder 2, dadurch gekennzeichnet, dass die Kolbenstange (3a) des zweiten Kolbens (3) in einem feststehenden Halter (9) ausserhalb des Zylinders geführt bzw. gehalten ist.

4. Einrichtung nach Anspruch 3, dadurch gekennzeichnet, dass der zweite Kolben (3) über eine Druckfeder (10) gegen seinen Halter (9) verschiebbar bzw. federnd abgestützt ist.

5. Einrichtung nach einem der Ansprüche 1-4, dadurch gekennzeichnet, dass jede Kolbenstange (2a, 3a) als Hohlstange ausgebildet ist, deren Kanal kolbenseitig in eine Oeffnung des Kolbenbodens mündet, welche durch ein Sieb abgedeckt ist.

6. Einrichtung nach Anspruch 4, dadurch gekennzeichnet, dass eine Verdichtungssteuervorrichtung vorhanden ist, welche einen Mikroschalter aufweist, der nach einem vorbestimmten Weg des mit der Druckfeder (10) verbundenen zweiten Kolbens (3) schaltet und dadurch die Antriebsvorrichtung des Brühzylinders (1) ausschaltet bzw. anhält.

7. Einrichtung nach einem der Ansprüche 1-6, dadurch gekennzeichnet, dass der erste Kolben (2) am ausserhalb des Brühzylinders gelegenen Abschnitt seiner Kolbenstange (20) Mittel aufweist, welche dazu vorgesehen sind, je nach Betriebsstellung zur Anlage an die Führung (5) im einen Zylinderende und an einen ausserhalb des Zylinders (1) angeordneten festen Anschlag (7), welcher die Arretierstellung bestimmt, zu gelangen.

8. Einrichtung nach Anspruch 7, dadurch gekennzeichnet, dass die sogenannten Mittel zur vorübergehenden Arretierung des ersten Kolbens (2) eine Kugelraste aufweisen.

9. Einrichtung nach einem der Ansprüche 1-7, dadurch gekennzeichnet, dass der Brühzylinder (1) wenigstens eine seitliche Zuführöffnung (1a) zum Einbringen des Kaffeepulvers aufweist.

10. Einrichtung nach einem der Ansprüche 1-8, dadurch gekennzeichnet, dass die Antriebsvorrichtung für den Brühzylinder (1) einen Zahnriemen- oder Kurbeltrieb mit elektrischem Antrieb, einen hydraulischen Arbeitszylinder oder eine drehende zu der Längsführung des Brühzylinders (1) parallele Gewindestange, welche durch ein entsprechendes Schraubgewinde im Brühzylindergehäuse führt, aufweist.

11. Einrichtung nach einem der Ansprüche 1-10, dadurch gekennzeichnet, dass sie zusammen mit anderen Maschinenkomponenten (17 bis 20) als Einschubeinheit (21) ausgebildet ist, welche austauschbar in einem Gerätechassis (22) gelagert ist.

## Claims

1. Apparatus for the preparing of coffee in an automatic coffee machine, including a scalding cylinder (1) intended for receipt of the coffee powder, including further a first and a second piston (2,3) and piston rods (2a,3a) belonging thereto, which pistons are allocated to said cylinder and are movable relative to each other along the axis of the cylinder to define a scalding chamber (13) and to compress the coffee powder filled there into, which first piston (2) closes off one of the ends of the cylinder and which second piston (3) is movable between a working position inside said cylinder (1) and a position outside of latter such to clear the other end of said cylinder allowing said first piston (2) to push the used coffee powder out, including further means for feeding water or steam and for discharging the coffee prepared, characterized in that a driving device is provided for moving said scalding cylinder back and forth between predetermined positions in a controlled manner along at least one longitudinal guide (4) along its axis, which cylinder moves in the one of the directions of movement over the substantially resting second piston (2) along until the filled in coffee powder is compressed under a predetermined force between the pistons, and moves off said second piston (3) when moving in the opposite directions of movement and clears the corresponding end of said cylinder and shifts relative to said first piston (2) locked in a predetermined position through the striking of the free end (6) of its piston rod (2a) on a stationary abutement (7), such that it urges the used portion of coffee powder out of the free end of the cylinder.

2. Apparatus according to claim 1, characterized in that said first piston (2) is guided in a guide (5) at one end of the scalding cylinder (1) such that it is free to move between a first end position at this one cylinder end and a second end position at the other, open end of the cylinder (1).

3. Apparatus according to claim 1 or 2, characterized in that the piston rod (3a) of the second piston (3) is guided, respectively held in a stationary support (9) outside of the cylinder.

4. Apparatus according to claim 3, characterized in that said second piston (3) is supported movably, respectively resiliently via a pressure spring (10) against its support (9).

5. Apparatus according to one of the claims 1-4, characterized in that each piston rod (2a,3b) is designed as a hollow rod in which the channel opens at the piston in an opening of the piston face surface which is covered by a screen.

6. Apparatus according to claim 4, characterized in that it comprises a compression control device which includes a micro switch which operates upon a predetermined path of movement of the second piston (3) which is coupled to the compression spring (10) and therewith switches off, respectively stops the driving device of the scalding cylinder (1).

7. Apparatus according to one of the claims 1-6, characterized in that the first piston (2) comprises at the section of its piston rod (20) located outside of said scalding cylinder means operative to move, depending from the working position to abut the guide (5) in one end of the cylinder and a stationary abutment (7) located outside of the cylinder (1) and which determines the locking position.

8. Apparatus according to claim 7, characterized in that the said means for temporary locking of the first piston (2) comprises a ball catch.

9. Apparatus according to one of the claims 1-7, characterized in that the scalding cylinder (1) comprises at least one lateral feed opening (1a) allowing the feeding of the coffee powder.

10. Apparatus according to one of the claims 1-8, characterized in that the driving device for the scalding cylinder (1) comprises a toothed belt or crank drive including an electrical driver, a hydraulic working cylinder or a rotating threaded rod extending parallel to the longitudinal guide of the scalding cylinder (1) and extending through a corresponding screw thread in the casing of the scalding cylinder.

11. Apparatus according to one of the claims 1-10, characterized in that it is designed together with other machine components (17 to 21) as slide-in tray (21) exchangeably supported in an apparatus frame (22).

## Revendications

1. Installation pour la préparation de café dans une machine à café automatique avec un cylindre d'échaudage (1) pour recevoir la poudre de café, auquel sont associés deux pistons (2,3) déplaçables l'un par rapport à l'autre suivant l'axe du cylindre, avec des tiges de pistons (2a,3a) associées, pour délimiter une chambre d'échaudage (13) et pour compacter la poudre de café introduite, le premier piston (2) fermant une première extrémité du cylindre et le second piston (3) pouvant occuper, mis-à-part une position de travail dans le cylindre (1), une position à l'extérieur de ce dernier, de façon à libérer l'autre extrémité du cylindre pour l'expulsion de la poudre de café usée par le premier cylindre (2), en outre avec des moyens pour amener l'eau ou la vapeur et pour l'écoulement du café préparé, caractérisé en ce qu'un dispositif d'entraînement est prévu pour déplacer le cylindre d'échaudage de façon contrôlée en avant et en arrière suivant au moins un guidage longitudinal (4) suivant un axe entre des positions prédéterminées, en glissant suivant une direction de déplacement par-dessus le second piston (3) qui est essentiellement fixe tout en entraînant forcément le premier piston (2) jusqu'à ce que la poudre de café introduite soit compressée entre les deux pistons avec une force prédéterminée, tandis qu'il quitte le second piston (3) en libérant l'extrémité du cylindre correspondant dans la direction opposée et qu'il se déplace par rapport au premier piston (2) qui est arrêté dans une position prédéterminée par le contact de l'extrémité libre (6) de sa tige de piston (2a) sur une butée fixe (7), de façon qu'il expulse la portion de poudre de café usée de l'extrémité libre du cylindre.

2. Installation selon la revendication 1, caractérisée en ce que le premier piston (2) est guidé dans son guidage (5) à l'extrémité du cylindre d'échaudage (1) de telle manière qu'il peut se déplacer librement entre une première position finale à cette extrémité du cylindre et une seconde position finale à l'autre extrémité ouverte du cylindre (1).

3. Installation selon la revendication 1 ou 2, caractérisée en ce que la tige du piston (3a) du second piston (3) est guidée, respectivement tenue dans un support fixe (9) à l'extérieur du cylindre.

4. Installation selon la revendication 3, caractérisée en ce que le second piston (3) est supporté de façon déplaçable, respectivement élastique par rapport à son support (9) par l'intermédiaire d'un ressort de compression (10).

5. Installation selon l'une des revendications 1-4, caractérisée en ce que chaque tige du piston (2a,3a) est formée par une tige creuse, dont le canal s'ouvre du côté du piston par une ouverture du fond de piston, qui est recouverte par une grille.

6. Installation selon la revendication 4, caractérisée en ce qu'elle comprend un dispositif de commande de compression qui comporte un micro-interrupteur, qui est actionné après une course prédéterminée du second piston (3) relié au ressort de compression (10) et qui ainsi interrompt respectivement arrête le dispositif d'entraînement du cylindre d'échaudage (1).

7. Installation selon l'une des revendications 1-6, carctérisée en ce que le premier piston (2) présente sur la section de sa tige de piston (20) située à l'extérieur du cylindre d'échaudage des moyens qui sont prévus selon la position de travail d'entrer en contact avec le guidage (5) dans l'une des extrémités du cylindre et avec une butée fixe (7) disposée à l'extérieur du cylindre (1) et qui détermine la position d'arrêt.

8. Installation selon la revendication 7, caractérisée en ce que lesdits moyens pour arrêter temporairement le premier piston (2) comportent un crantage à bille.

9. Installation selon l'une des revendications 1-7, caractérisée en ce que le cylindre d'échaudage (1) présente au moins une ouverture d'introduction latérale (1a) pour l'introduction de la poudre de café.

10. Installation selon l'une des revendications 1-8, caractésisée en ce que le dispositif d'entraînement pour le cylindre d'échaudage (1) comprend un entraînement électrique à courroie crantée ou à manivelle, un cylindre de travail hydrolique ou une tige filetée tournante parallèle au guidage longitudinal du cylindre d'échaudage (1) et se poursuivant à travers un filetage correspondant dans le bâti du cylindre d'échaudage.

11. Installation selon l'une des revendications 1-10, caractérisée en ce qu'elle forme avec d'autres composants de machines (17 à 20) une unité à tiroir (21), qui est disposée de façon échangeable dans un chassis d'appareillage (22).
